# EUROPÄISCHE PATENTSCHRIFT

(11) **EP 3 620 054 B1**
(45) Veröffentlichungstag und Bekanntmachung des Hinweises auf die Patenterteilung: **30.12.2020**
(21) Anmeldenummer: 19186300.0
(22) Anmeldetag: 15.07.2019
(51) Int. Cl.: A21C 5/00, A21C 3/02

(54) **TEIGBAND-ERZEUGUNGSVORRICHTUNG SOWIE BETRIEBSVERFAHREN HIERFÜR**
DOUGH BAND PRODUCTION DEVICE AND OPERATING METHOD FOR SAME
DISPOSITIF DE PRODUCTION DE BANDE DE PÂTE AINSI QUE PROCÉDÉ DE FONCTIONNEMENT CORRESPONDANT

(30) Priorität: 07.09.2018 DE 102018215277
(43) Veröffentlichungstag der Anmeldung: 11.03.2020
(73) Patentinhaber: WP Kemper GmbH, 33397 Rietberg (DE)
(72) Erfinder: Engelmeier, Christian, 33397 Rietberg (DE)
(74) Vertreter: Rau, Schneck & Hübner Patentanwälte Rechtsanwälte PartGmbB

(56) Entgegenhaltungen:
- EP-A1- 2 168 435
- EP-A1- 3 199 028
- EP-A2- 0 919 128
- DE-C- 172 907
- DE-U1-202015 104 745
- US-A- 3 561 372

## Beschreibung

Die Erfindung betrifft eine Teigband-Erzeugungsvorrichtung zur Erzeugung eines Endlos-Teigbandes. Weiterhin betrifft die Erfindung ein Verfahren zum Betrieb einer derartigen Teigband-Erzeugungsvorrichtung.

Eine Teigband-Erzeugungsvorrichtung ist bekannt aus der EP 2 510 791 A2. Die EP 0 919 128 A2 beschreibt eine Herstellvorrichtung für ein Teigband. Die EP 2 168 435 A1 beschreibt ein Verfahren sowie eine Vorrichtung zur Anordnung einer Teiglage auf einem Förderer. Die US 3,561,372 A beschreibt einen Teigteiler. Die DE 20 2015 104 745 U1 beschreibt eine Teigportioniereinrichtung. Die DE-PS 172 907 offenbart eine Teigteil- und Glättmaschine.

Es ist eine Aufgabe der vorliegenden Erfindung, einen Durchsatz einer derartigen Teigband-Erzeugungsvorrichtung bei möglichst gleichbleibender Teigbandqualität zu erhöhen.

Diese Aufgabe ist erfindungsgemäß gelöst durch eine Teigband-Erzeugungsvorrichtung mit den im Anspruch 1 angegebenen Merkmalen. Erfindungsgemäß wurde erkannt, dass durch den Einsatz eines Teigabschnittserzeugers, der mindestens zwei Teigabschnitte parallel erzeugt, ein durchsatzerhöhter Betrieb ermöglicht wird, bei dem die parallel erzeugten Teigabschnitte gleichzeitig beziehungsweise mit zeitlichem Überlapp der nachfolgenden Teig-Walzeinrichtung zugeführt werden. Dies führt zur Möglichkeit eines im Grenzfall doppelten Teigdurchsatzes im Vergleich zu einer Teigband-Erzeugungsvorrichtung, bei der die Teigabschnitte vom Teigabschnittserzeuger sequenziell mit denselben Erzeugungskomponenten generiert werden. Ein zeitlicher Abstand, mit dem die mindestens zwei Teigabschnitte der Teig-Walzeinrichtung zugeführt werden, ist so groß, dass zum Beispiel ein vorgegebener Überlapp zwischen den Teigabschnitten in der Teig-Walzeinrichtung erreichbar ist. Es ergeben sich zusätzliche Freiheitsgrade, die zur Optimierung der Qualität des erzeugten Endlos-Teigbandes genutzt werden können. Die Teigband-Erzeugungsvorrichtung kann eine Teig-Walzeinrichtung nach Art derjenigen einsetzen, die beschrieben ist in der EP 2 510 791 A2, wobei diese natürlich an den erhöhten Teigdurchsatz angepasst sein muss.

Ein Überlapp der parallel erzeugten Teigabschnitte beim Eintritt in die Teig-Walzeinrichtung kann im Bereich zwischen 40mm und 100mm liegen.

Mit der Teigband-Erzeugungsvorrichtung ist ein Durchsatz möglich, der größer ist als 3t/h.

Die Teig-Walzeinrichtung kann mindestens einen Abstandsensor zur Kontrolle einer Stärke sowie eines Verlaufs des durch die Teig-Walzeinrichtung geförderten Teigbandes aufweisen.

Der Teigabschnittserzeuger kann bei einer entsprechenden Variante der Teigband-Erzeugungsvorrichtung auch so ausgeführt sein, dass er mehr als zwei Teigabschnitte parallel erzeugt.

Eine Anordnung des Teigabschnittserzeugers über der Teig-Walzeinrichtung nach Anspruch 2 vermeidet ein unkontrolliertes Fließen der erzeugten Teigabschnitte vor beziehungsweise beim Eintritt in die Teig-Walzeinrichtung.

Unabhängige Antriebe der Komponenten der Teigband-Erzeugungsvorrichtung nach den Ansprüchen 3 und 4 ermöglichen eine frei wählbare Vorgabe von Durchtrittsvarianten der parallel erzeugten Teigabschnitte hin zur Teig-Walzeinrichtung. Hierüber lassen sich die Teig-Durchtrittsmenge sowie ein Überlapp zwischen den Teigabschnitten und/oder ein Abstand zwischen den Teigabschnitten vorgeben.

Sternwalzen nach Anspruch 5 haben sich zur Teigabschnittserzeugung als besonders geeignet herausgestellt. In Längserstreckung der jeweiligen Sternwalze kann der Teig-Vorratsbehälter eine deutlich größere Erstreckung aufweisen als senkrecht hierzu, kann also einen Innenquerschnitt mit einem von 1 deutlich abweichenden Aspektverhältnis aufweisen. Dies vermeidet eine unerwünscht hohe Gewichtslast auf bodenseitig im Teig-Vorratsbehälter vorliegendem Teig und führt somit zu einer schonenden Teigabschnittserzeugung. Auch ein unkontrolliertes Fließen des Teiges ist bei einem derartigen Teigabschnittserzeuger und einem derartigen zugeordneten Teig-Vorratsbehälter vermieden. Sternwalzen, die zu verschiedenen zu erzeugenden Teigabschnitten gehören, können eine gemeinsame Drehachse haben. Für jeden zu erzeugenden Teigabschnitt kann ein Paar aus miteinander zusammenwirkenden Sternwalzen mit voneinander horizontal beabstandeten, parallelen Drehachsen vorgesehen sein. Für genau einen Teigabschnitt ist ein derartiges Sternwalzen-Paar bekannt aus der DE 20 2015 104 745 U1. Bei zwei parallel zu erzeugenden Teigabschnitten können also insgesamt vier Sternwalzen vorgesehen sein, nämlich zwei Sternwalzen-Paare. Für jeden parallel zu erzeugenden Teigabschnitt sind dann zwei Sternwalzen vorgesehen. Ein Antrieb der Sternwalzen für die verschiedenen Teigabschnitte kann unabhängig voneinander erfolgen.

Mindestens eine rotierende Schneide nach Anspruch 6 hat sich zum Trennen der parallel erzeugten Teigabschnitte als besonders geeignet herausgestellt. Die Schneide, die auch feststehend angeordnet sein kann, kann zwischen den Komponenten, insbesondere zwischen den Sternwalzen, angeordnet sein, die zur parallelen Erzeugung der Teigabschnitte dienen. Eine Drehachse der Schneide kann mit der Drehachse von Sternwalzen zusammenfallen, die verschiedenen, parallel zu erzeugenden Teigabschnitte zugeordnet sind. Sobald zum Erzeugen eines Teigabschnitts mehrere Sternwalzen, zum Beispiel ein Sternwalzen-Paar, zum Einsatz kommen, kann jeder Sternwalze eine rotierende Schneide zugeordnet sein. Bei der Verwendung zweier Sternwalzen-Paare können also zum Beispiel zwei rotierende Schneiden vorgesehen sein. Die rotierenden Schneiden können als Messerscheiben ausgeführt sein, die jeweils den Außendurchmesser einer Sternwalze haben.

Die Vorteile eines Betriebsverfahrens nach Anspruch 7 entsprechen denen, die vorstehend unter Bezugnahme auf die erfindungsgemäße Teigband-Erzeugungsvorrichtung bereits erläutert wurden. Soweit ein geringerer Teigdurchsatz gewünscht ist, kann der Betriebsmodus gewählt werden, bei dem zu einem vorgegebenen Zeitpunkt jeweils genau ein von dem Teigabschnittserzeuger erzeugter Teigabschnitt der Teig-Walzeinrichtung zugeführt wird. Ein Überlapp zwischen den der Teig-Walzeinrichtung zugeführten Teigabschnitten liegt dann nicht vor. Es kann dann beispielsweise nur eine der Sternwalzen in Betrieb sein.

Ein Ausführungsbeispiel der Erfindung wird nachfolgend anhand der Zeichnungen näher erläutert. In dieser zeigen:
- Fig. 1: in einer innere Details preisgebenden, schematischen Seitenansicht eine Teigband-Erzeugungsvorrichtung zur Formung eines Teigbandes aus zugeführten Teigportionen, aufweisend eine Teig-Walzeinrichtung in Form eines Walzenstuhls, wobei ein Teigabschnittserzeuger der Erzeugungsvorrichtung derart arbeitet, dass er zwei Teigabschnitte parallel erzeugt und parallel der Teig-Walzeinrichtung zuführt;
- Fig. 2: eine Detailansicht einer Walzen- und Sensoranordnung der Teig-Walzeinrichtung gemäß Detail II in Fig. 1;
- Fig. 3: in einer zur Figur 1 ähnlichen Darstellung die Teigband-Erzeugungsvorrichtung nach Figur 1 in einer alternativen Betriebsvariante des Teigabschnittserzeugers, bei der die beiden parallel erzeugten Teigabschnitte sequenziell der Teig-Walzeinrichtung zugeführt werden, wobei in der gezeigten Momentandarstellung gerade ein rechts dargestellter Teigabschnitt der Teig-Walzeinrichtung zugeführt wird;
- Fig. 4: in einer zur Figur 3 ähnlichen Darstellung die Teigband-Erzeugungsvorrichtung mit dem Teigabschnittserzeuger in der Betriebsvariante nach Figur 3, wobei gerade ein in der Figur 4 links dargestellter Teigabschnitt der Teig-Walzeinrichtung zugeführt wird;
- Fig. 5: einen horizontalen Schnitt durch den Teigabschnittserzeuger der Teigband-Erzeugungsvorrichtung auf Höhe von Drehachsen eines Sternwalzen-Paares;
- Fig. 6: ein Zuführschema eines Teigförderers der Teigband-Erzeugungsvorrichtung in der Betriebsvariante nach Figur 1;
- Fig. 7: ein weiteres Zuführschema eines Teigförderers der Teigband-Erzeugungsvorrichtung in der Betriebsvariante nach Figur 1; und
- Fig. 8: ein zeitliches Ansteuerschema für zwei Antriebsmotoren des Teigabschnittserzeugers einerseits sowie für zwei Antriebsmotoren des Teigförderers andererseits zur Erzeugung von Zuführvarianten für die Teigabschnitte nach Art der Figuren 6 und 7.

Eine Teigband-Erzeugungsvorrichtung 1 dient zur Erzeugung eines Endlos-Teigbandes 2a. Die Erzeugungsvorrichtung 1 kann einen Stundendurchsatz im Bereich von mehr als einer Tonne Teig, insbesondere von mehr als zwei oder auch von mehr als drei Tonnen Teig gewährleisten.

Die Teigband-Erzeugungsvorrichtung 1 hat einen Teig-Vorratsbehälter 2 in Form eines Trichterbehälters, in dem von oben fertig gemischt, gekneteter Teig eingefüllt werden kann, der vor dem Einfüllen bereits eine vorgegebene Gärzeit hinter sich hat

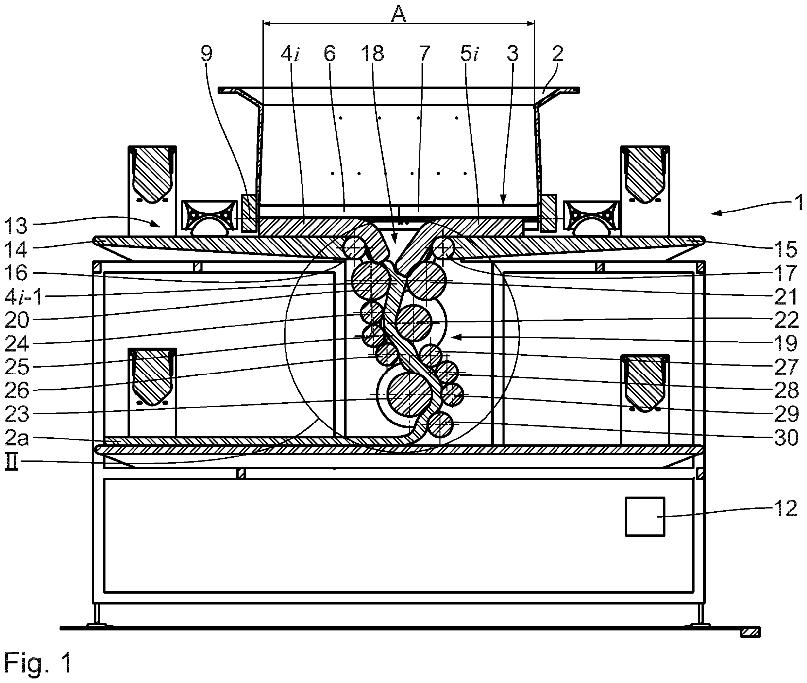

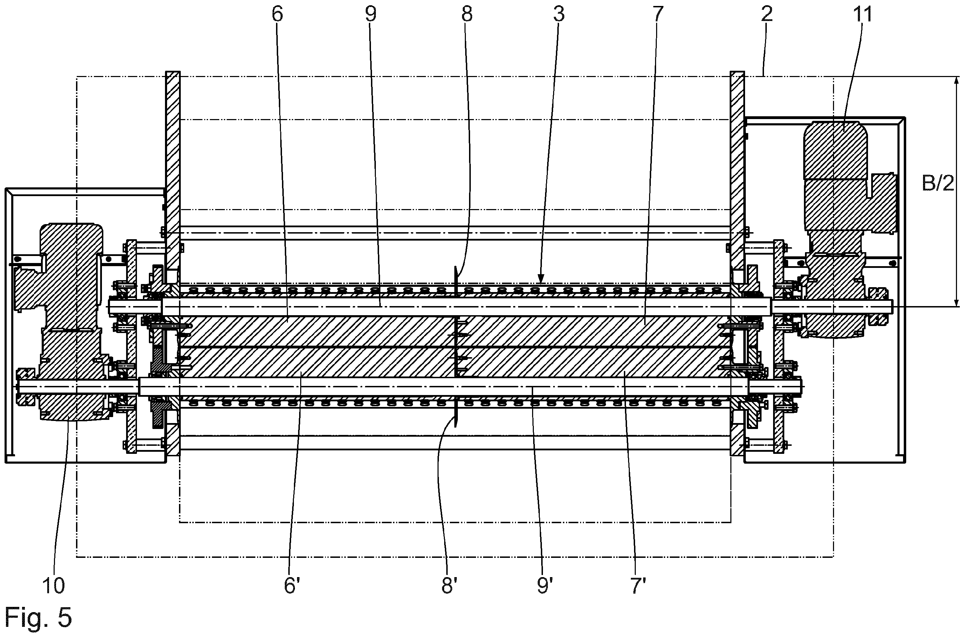

Im Bereich eines offenen Bodens des Teig-Vorratsbehälters 2 hat dieser einen Teigabschnittserzeuger 3 zur Erzeugung portionsweiser Teigabschnitte 4i, 5i aus dem bevorrateten Teig. Der Teigabschnittserzeuger 3 ist derart gestaltet, dass er zwei Teigabschnitte 4i, 5i parallel erzeugen kann. Für jeden der parallel zu erzeugenden Teigabschnitte 4i, 5i hat der Teigabschnittserzeuger 3 jeweils ein Sternwalzen-Paar 6, 6' und 7, 7' (vgl. Fig. 5). Das in der der Figur 1 links dargestellte Sternwalzen-Paar 6, 6'erzeugt die Teigabschnitte 4i und das in der Figur 1 rechts dargestellte Sternwalzen-Paar 7, 7' erzeugt die Teigabschnitte 5i. Zwischen den beiden benachbart angeordneten Sternwalzen-Paaren 6, 6' und 7, 7' sind drehbare, runde Messerschneiden 8, 8' angeordnet, die für eine Trennung der Teigabschnitte 4i, 5i bei der Abschnittserzeugung durch die Sternwalzen 6, 7 sorgen. Die Messerschneiden 8, 8' stellen rotierende Schneiden zum Trennen der parallel erzeugten Teigabschnitte 4i, 5i dar. Jedes der Sternwalzen-Paare 6, 6' und 7, 7' gibt drei Walzenkammern vor, sodass eine gegensinnige Drehung der Sternwalzen-Paare der jeweiligen Sternwalzen-Paare 6, 6' und 7, 7' um 120° zur Erzeugung genau eines vom Teigvorrat im Teig-Vorratsbehälter 2 abgescherten Teigabschnitts 4i, 5i führt.

Die beiden Sternwalzen 6, 7 sowie die zwischenliegende Messerschneide 8 einerseits sowie die beiden Sternwalzen 6', 7' sowie die zwischenliegende Messerschneide 8' andererseits sind jeweils um eine gemeinsame horizontale Drehachse 9, 9' drehbar, die in der Zeichenebene der Figur 5 liegen. Die beiden Sternwalzen-Paare 6, 6' einerseits und 7, 7' andererseits werden über voneinander unabhängige Drehantriebe 10, 11 (vergleiche Figur 5) angetrieben, die außerhalb des Teig-Vorratsbehälters 2 angeordnet sind. Die Drehantriebe 10, 11 werden wie weitere Antriebs- und Sensorkomponenten der Teigband-Erzeugungsvorrichtung 1 von einer zentralen Steuereinrichtung 12 angesteuert, die in der Figur 1 schematisch dargestellt ist.

Unterhalb des Teigabschnittserzeugers 3 ist ein Teigförderer 13 der Teigband-Erzeugungsvorrichtung 1 angeordnet. Der Teigförderer 13 dient zum Fördern der Teigabschnitte 4i, 5i nach deren Erzeugung durch den Teigabschnittserzeuger 3. Der Teigförderer 13 umfasst ein in der Figur 1 links angeordnetes Zuführband 14 zum Fördern der Teigabschnitte 4i und ein in der Figur 1 rechts angeordnetes Zuführband 15 zum Fördern der Teigabschnitte 5i. Der Teigförderer 13 ist unabhängig vom Teigabschnittserzeuger 3 angetrieben. Insbesondere haben die Zuführbänder 14 und 15 voneinander unabhängige Förderantriebe 16, 17. Diese können unabhängig von den Drehantrieben 10, 11 von der Steuereinrichtung 12 angesteuert werden. Die Drehachsen der Zuführantriebe 16, 17 für die Zuführbänder 14, 15 verlaufen senkrecht zur Zeichenebene der Figur 1. Eine Bandgeschwindigkeit der Zuführbänder 14, 15 ist größer als 1m/min und kann größer sein als 2m/min.

Eine Förderrichtung des Zuführbandes 14 verläuft in der Figur 1 von links nach rechts und eine Förderrichtung des Zuführbandes 15 verläuft in der Figur 1 von rechts nach links. Längs der Förderrichtungen der Zuführbänder 14, 15, also in horizontaler Richtung der Figur 1, hat ein Behältervolumen des Teig-Vorratsbehälters 2 eine deutlich größere Erstreckung als senkrecht zur Zeichenebene der Figur 1. Der Teig-Vorratsbehälter 2 hat also einen Behälterquerschnitt in einer Schnittebene senkrecht zur Teigförderrichtung durch den Teig-Vorratsbehälter mit stark von 1 abweichendem Aspektverhältnis. Die längere Erstreckung A dieses Aspektverhältnisses des Teig-Vorratsbehälters 2 ist in der Figur 1 dargestellt und kann im Bereich des 1,5-fachen bis hin zum 5-fachen der hierzu senkrechten Erstreckung B liegen, deren Hälfte B/2 in der Figur 5 angedeutet ist.

Dieses Aspektverhältnis eines Innenquerschnitts des Teig-Vorratsbehälters 2 gewährleistet eine vergleichsweise geringe Teiglast auf die bodenseitigen, vom Teigabschnittserzeuger 3 jeweils erzeugten Teigabschnitte 4i, 5i.

Zwischen den beiden Zuführbändern 14, 15 liegt ein Zuführ-Durchtritt 18, durch den die erzeugten Teigabschnitte 4i, 5i einer unterhalb des Teigförderers 13 angeordneten Teig-Walzeinrichtung 19 zugeführt werden können.

Der Teigabschnittserzeuger 3 ist über der Teig-Walzeinrichtung 19 angeordnet.

In Teigförderrichtung nach dem Zuführ-Durchtritt 18 weist die Teig-Walzeinrichtung 19 zunächst ein Andrückwalzenpaar mit zwei verstellbaren Andrückwalzen 20, 21 auf, die auch als Abzugsrollen bezeichnet werden.

Drehachsen der verschiedenen Walzen der Teig-Walzeinrichtung 19 verlaufen allesamt senkrecht zur Zeichenebene der Figur 1.

Eine Zuführweite eines Durchtritts zwischen den in der Teigförderrichtung führenden Andrückwalzen 20, 21 ist über eine entsprechende horizontale Verstellbarkeit der beiden Andrückwalzen 20, 21 vorgebbar.

Im Teig-Bearbeitungsweg nach dem Andrückwalzenpaar mit den Andrückwalzen 20, 21 hat ein Walzwerk der Teig-Walzeinrichtung 19 zwei übereinander angeordnete Hauptwalzen 22, 23, die um voneinander beabstandete und in etwa vertikal übereinander liegende horizontale Drehachsen drehbar sind. Der im Bearbeitungsweg ersten Hauptwalze 22 sind insgesamt drei Gegen-Andrückwalzen 24, 25, 26 zugeordnet. Der im Bearbeitungsweg zweiten Hauptwalze 23 sind vier weitere Gegen-Andrückwalzen 27, 28, 29, 30 zugeordnet. Die Gegen-Andrückwalzen 24 bis 30 sind in der Reihenfolge ihrer Anordnung im Bearbeitungsweg nummeriert. Die letzte Gegen-Andrückwalze 30 kann gleichzeitig eine Messerwalze zum Längsschneiden des fertig gewalzten Teigbandes 2a darstellen. Die Gegen-Andrückwalzen 24 bis 30 sind ihrerseits um horizontale Drehachsen drehbar, die voneinander beabstandet sind. Das Teigband 2 verläuft durch das Walzwerk der Teig-Walzeinrichtung 19 in der Seitenansicht nach Figur 1 S-förmig. Zu weiteren Details des Aufbaus und der Wirkungsweise des Walzwerks wird verwiesen auf die EP 2 510 791 A2.

Eine Bandgeschwindigkeit des Teigbandes 2a liegt beim Austritt aus dem Walzwerk der Teig-Walzeinrichtung 19 im Bereich zwischen 0,5m/min und 2,5m/min und kann im Bereich zwischen 1m/min und 1,5m/min liegen.

Zum Walzwerk der Teig-Walzeinrichtung 19 gehören noch insgesamt drei Abstandsensoren 31, 32, 33. Der erste Abstandsensor 31 misst einen Abstand zwischen dem Sensor und dem Teigband 2a im Förderweg in etwa auf Höhe der Gegen-Andrückwalze 27, also der ersten Gegen-Andrückwalze der zweiten Hauptwalze 23. Der zweite Abstandsensor 32 misst den Abstand zwischen dem Sensor und dem Teigband 2a unmittelbar bevor das Teigband 2a mit der zweiten Hauptwalze 23 in Kontakt kommt. Der dritte Abstandsensor 33 misst den Abstand zwischen dem Sensor 33 und dem Teigband 2a beim Austritt aus dem Walzwerk der Teig-Walzeinrichtung 19.

Bei den Abstandsensoren 31 bis 33 kann es sich um optische Sensoren handeln, die als Lichtquelle beispielsweise einen Laser beziehungsweise eine Laserdiode einsetzen.

Die Sensoren 31 bis 33 stehen mit der Steuereinrichtung 12 in Signalverbindung.

Die Teigband-Erzeugungsvorrichtung 1 kann zudem noch einen nicht näher dargestellten Füllstandsensor zur Messung eines Teigfüllstandes im Teig-Vorratsbehälter 2 aufweisen, der ebenfalls mit der Steuereinrichtung 12 in Signalverbindung steht. Ein Betrieb des Teigabschnittserzeugers 3 und/oder des Teigförderers 13 und/oder der Teig-Walzeinrichtung 19 kann abhängig auch vom Füllstandergebnis dieses Füllstandsensors erfolgen.

Figur 1 zeigt einen Betriebsmodus der Teigband-Erzeugungsvorrichtung 1, bei dem alle vom Teigabschnittserzeuger 3 parallel erzeugten Teigabschnitte 4i, 5i der Teig-Walzeinrichtung 19 zugeführt werden. Hierbei sind beide Sternwalzen-Paare 6, 6' und 7, 7' und beide Zuführbänder 14, 15 angetrieben. Gezeigt ist in der Figur 1 die Situation, bei der bei angetriebenem rechten Zuführband 15 ein Teigabschnitt 5i gerade zwischen den beiden Abzugsrollen 20, 21 erfasst wird und das bis dahin erzeugte Teigband 2a fortsetzt. Ein weiterer Teigabschnitt 4i ist vom Teigabschnittserzeuger 3 durch entsprechenden Betrieb des in der Figur 1 linken Sternwalzen-Paares 6, 6' bereits vorbereitet. Das zugeordnete Zuführband 14 steht in der Momentansituation nach Figur 1 und wird erst dann in Teigförderrichtung angetrieben, wenn der in der Figur 1 rechte Teigabschnitt 5i weiter durch das Walzwerk der Teig-Walzeinrichtung 19 gefördert ist. Durch den abwechselnden Betrieb der Zuführbänder 14, 15 und den hiermit entsprechend synchronisierten Betrieb der Drehantriebe 10, 11 der Sternwalzen-Paare 6, 6' und 7, 7' lässt sich ein Überlapp zwischen den Teigabschnitten 4i, 5i gesteuert und wahlweise vorgeben, wie nachfolgend noch erläutert wird.

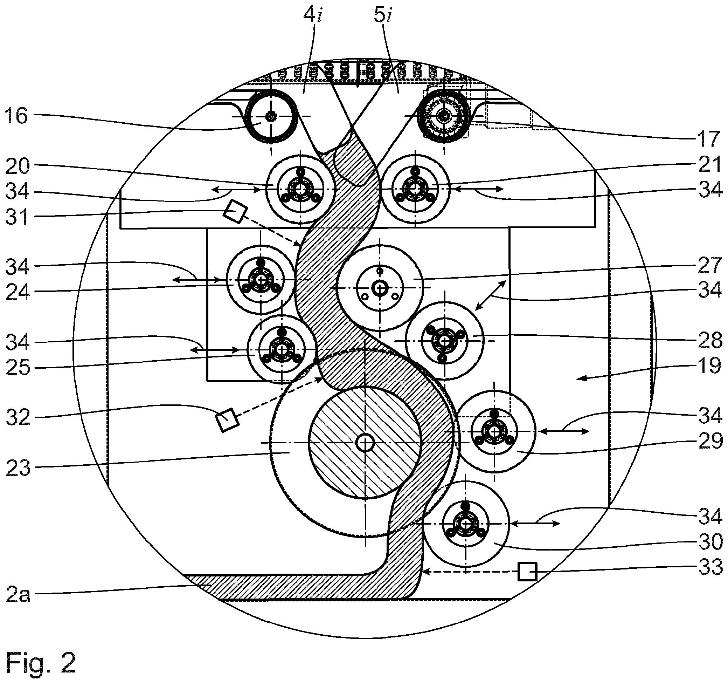

Bei der Ausführung des Walzwerks der Teig-Walzeinrichtung 19 nach Figur 2 sind nach dem Andrückwalzenpaar 20, 21 der ersten Hauptwalze 22 lediglich zwei Gegen-Andrückwalzen 24, 25 zugeordnet. Im Vergleich zum Walzwerk nach Figur 1 fehlt also die dritte Gegen-Antriebswalze 26 gegenüber der ersten Hauptwalze 22.

Die führenden Andrückwalzen 20, 21 sowie die Gegen-Andrückwalzen 24 bis 30 sind zur Vorgabe einer Weite des Teig-Bearbeitungsweges senkrecht zu deren jeweiligen Drehachsen verstellbar, wie in der Figur 2 durch Doppelpfeile 34 angedeutet.

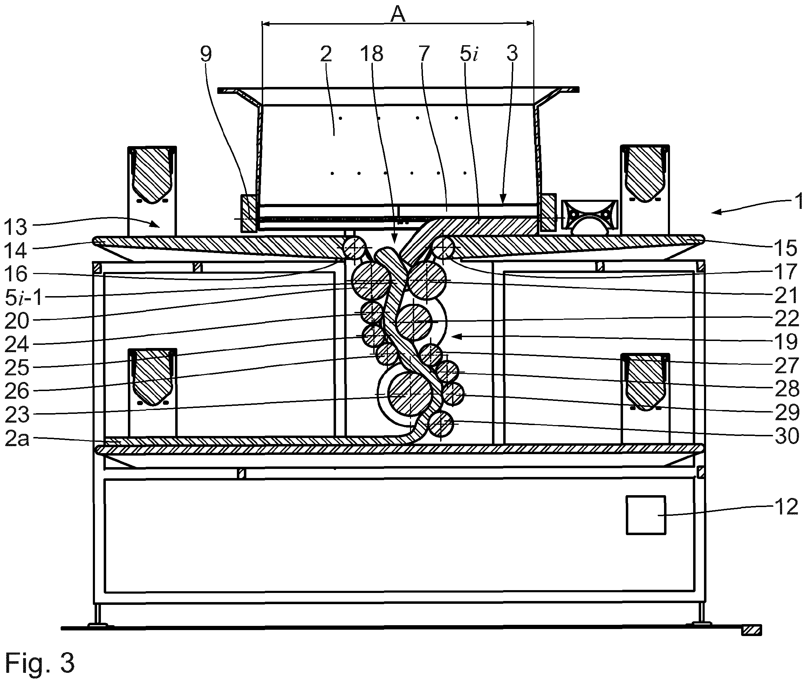

Figur 3 zeigt einen zur Figur 1 alternativen Betriebsmodus der Teigband-Erzeugungsvorrichtung 1, bei der ausschließlich die in der Figur 3 rechte Sternwalze 7 und das in der Figur 3 rechte Zuführband 15 in Betrieb sind. Bei diesem Betriebsmodus wird also genau ein von dem Teigabschnittserzeuger 3 erzeugter Teigabschnitt, in diesem Falle der Teigabschnitt 5i, der Teig-Walzeinrichtung 19 zugeführt. Durch entsprechende Ansteuerung des Zuführantriebs 17 des Zuführbandes 15 kann ein Überlapp zwischen dem Teigabschnitt 5i und dem vorhergehenden Teigabschnitt 5i-1 vorgegeben werden. In diesem Betriebsmodus ist ein Teigdurchsatz der Teigband-Erzeugungsvorrichtung 1 halb so groß wie im Betriebsmodus nach Figur 1.

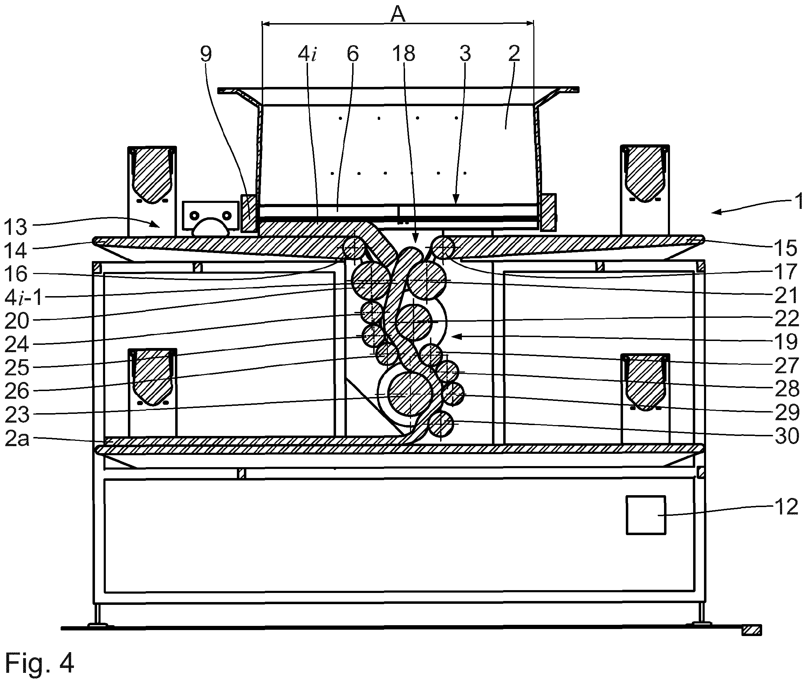

Figur 4 zeigt einen der Figur 3 entsprechenden Betriebsmodus, bei dem wiederum genau ein von dem Teigabschnitterzeuger 3 erzeugter Teigabschnitt, in diesem Fall der Teigabschnitt 4i, der Teig-Walzeinrichtung 19 zugeführt wird. Im Betriebsmodus nach Figur 4 sind der Drehantrieb 10 des in der Figur 4 linken Sternwalzen-Paares 6, 6' sowie der Zuführantrieb 16 des in der Figur 4 linken Zuführbandes 14 in Betrieb.

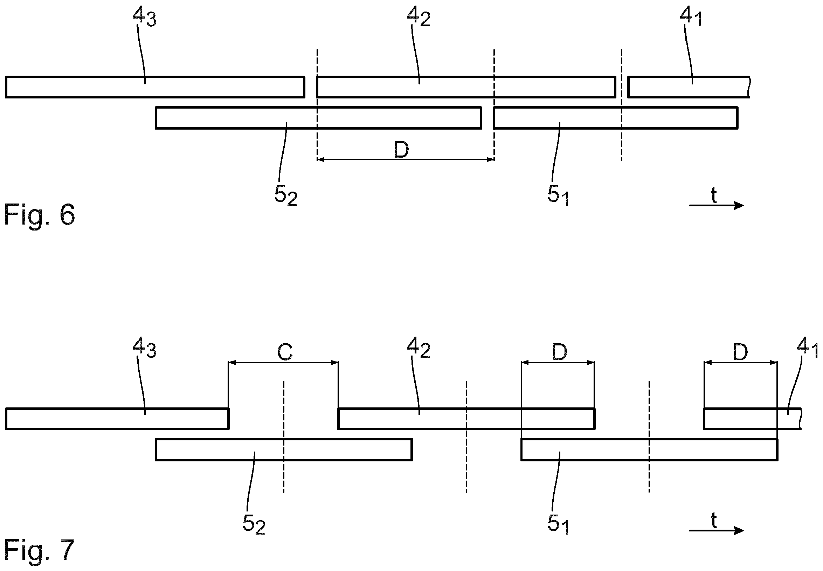

Figur 6 zeigt schematisch eine Überlappvariante der Teigabschnitte 4i, 5i beim Betriebsmodus nach Figur 1. Dargestellt ist ein zeitlicher Verlauf eines Durchtritts der Teigabschnitte 4i, 5i durch den Zuführ-Durchtritt 18. Die Antriebe 10, 11 der Sternwalzen-Paare 6, 6' und 7, 7' und die Antriebe 16, 17 der Zuführbänder 14, 15 sind so aufeinander abgestimmt, dass die Teigabschnitte 4i (dargestellt: 4₁, 4₂ und 4₃) einerseits und 5i (dargestellt: 5₁, 5₂) andererseits jeweils direkt aufeinander folgend dem Zuführ-Durchtritt 18 zugeführt werden. Ein Abstand zwischen benachbarten Teigabschnitten 4i, 4i+1 einerseits und zwischen benachbarten Teigabschnitten 5i, 5i+1 andererseits ist sehr klein und kann praktisch null sein. Die Antriebe 10, 11 und 16, 17 sind weiterhin beim Betriebsmodus nach Figur 6 so aufeinander abgestimmt, dass aufeinander folgende Teigabschnitte 4i, 5i jeweils längs ihrer halben Längserstreckung in der Teigförderrichtung miteinander überlappen. Es ergibt sich somit eine Teigabschnitts-Zustellung mit praktisch doppelter Kapazität.

Figur 7 zeigt eine Variante des Betriebsmodus nach Figur 6, bei der die Antriebe 10, 11 sowie 16, 17 so aufeinander abgestimmt sind, dass zwischen den Teigabschnitten 4i, 4i+1 einerseits und den Teigabschnitten 5i, 5i+1 andererseits jeweils ein Abstand C verbleibt, der im Bereich zwischen 20mm und 200mm und insbesondere im Bereich von 100mm liegen kann. Die Zustellung der Teigabschnitte 4i einerseits und der Teigabschnitte 5i andererseits erfolgt so, dass ein Überlapp D zwischen Teigabschnitten 4i, 5i einerseits und zwischen Teigabschnitten 5i, 4i+1 andererseits jeweils gleich groß ist. Ein Verhältnis D/C zwischen dem Teigabschnitts-Überlapp D und dem Abstand C sequenziell aufeinander folgender Teigabschnitte kann im Bereich zwischen 1 und 100 und beispielsweise im Bereich zwischen 5 und 20 liegen. Diesbezüglich ist die Darstellung nach den Figuren 6 und 7 nicht maßstabsgetreu.

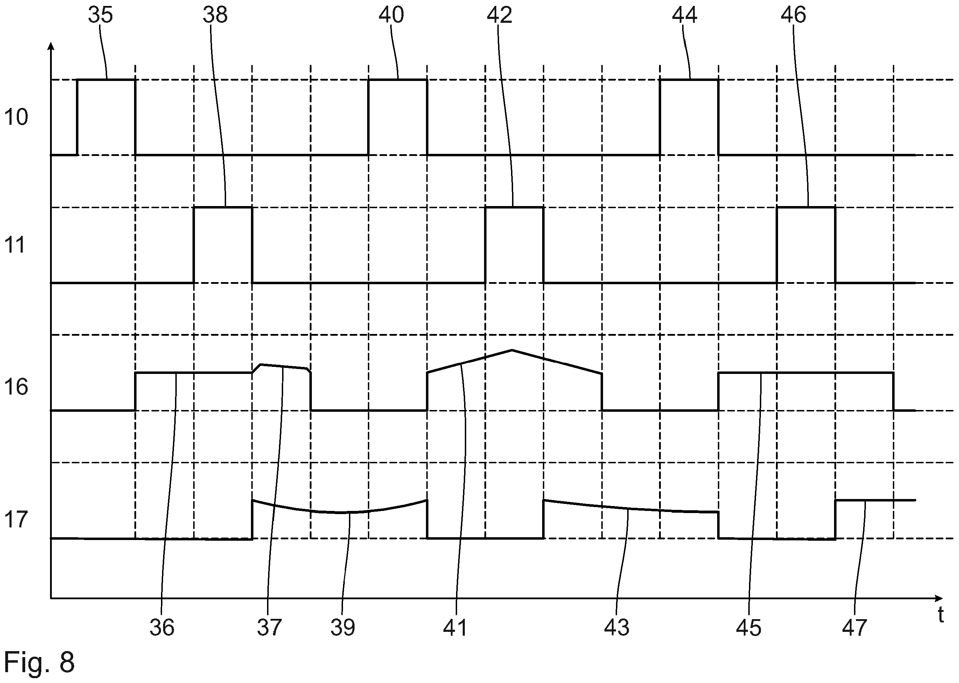

Figur 8 zeigt ein Signalschema für eine zeitliche Ansteuerung der Drehantriebe 10, 11 für die Sternwalzen-Paare 6, 6' und 7, 7' sowie für die Zuführantriebe 16, 17 für die Zuführbänder 14, 15. Insbesondere ergibt sich hieraus die Synchronisierung dieser Antriebe 10, 11, 16, 17. Die oberste Zeile ist das zeitliche Signalschema für den Drehantrieb 10 für das in der Figur 1 linke Sternwalzen-Paar 6, 6'. Die zweite Zeile in der Figur 8 zeigt das zeitliche Signalschema für den Drehantrieb 11 für das in der Figur 1 rechte Sternwalzen-Paar 7, 7'. Die dritte Zeile der Figur 8 zeigt das zeitliche Signalschema für den Zuführantrieb 16 des in der Figur 1 linken Zuführbandes 14. Die vierte und letzte Zeile der Figur 8 zeigt das zeitliche Signalschema für den Zuführantrieb 17 des in der Figur 1 rechten Zuführbandes 15.

Zunächst wird ein Signalimpuls 35 an den Drehantrieb 10 gegeben, sodass sich das in der Figur 1 linke Sternwalzen-Paar 6, 6' um 120° dreht und somit einen Teigabschnitt 4i erzeugt, der auf dem zunächst ruhenden in der Figur 1 linken Zuführband 14 zum Liegen kommt. Unmittelbar nach Beendigung des Signalimpulses 35 wird der Zuführantrieb 16 mit einem Signalimpuls 36 angesteuert und fördert den Teigabschnitt 4i durch den Zuführ-Durchtritt 18 in das Walzwerk der Teig-Walzeinrichtung 19. Ein Signalwert des Signalimpulses 36 muss nicht einem Rechtecksignalverlauf folgen, sondern kann eine variable Signalhöhe haben, sodass das Zuführband 14 während des Signalimpulses 36 entsprechend eine variable Geschwindigkeit in der Teigförderrichtung haben kann. Dies ist in der Figur 8 durch ein Signalhöhenprofil 37 angedeutet. Dieses Signalhöhenprofil 37 kann einen Freiformverlauf haben oder kann alternativ auch rampenartig an- und/oder absteigend gestaltet sein.

Während des Signalimpulses 36 erfolgt eine Ansteuerung des Drehantriebs 11 des in der Figur 1 rechten Sternwalzen-Paares 7, 7', sodass dieses, wiederum durch Drehung um die Drehachse 9 um 120°, einen Teigabschnitt 5i erzeugen kann, während der Teigabschnitt 4i durch den Zuführ-Durchtritt 18 gefördert wird. Diese Ansteuerung des Drehantriebs 11 erfolgt über einen Signalimpuls 38. Unmittelbar nach Beendigung des Signalimpulses 38 wird der Zuführantrieb 17 für das in der Figur 1 rechte Zuführband 15 mit einem Signalimpuls 39 angesteuert. Während der hierüber erfolgenden Förderung des Teigabschnitts 5i durch den Zuführ-Durchtritt 18 erfolgt gleichzeitig wiederum die Ansteuerung des Drehantriebs 10 für das in der Figur 1 linke Sternwalzen-Paar 6, 6' zur Erzeugung eines weiteren Teigabschnitts 4i+1 über einen Signalimpuls 40. Entsprechend synchronisiert erfolgt eine weitere Ansteuerung der Antriebe 16, 11 und 17 über Signalimpulse 41 bis 43 und in einer nächsten Sequenz wiederum der Antriebe 10, 16, 11 und 17 über Signalimpulse 44 bis 47.

Über die Bandgeschwindigkeit der Zuführbänder 14, 15 sowie gegebenenfalls über die Ansteuerdauer der Zuführantriebe 16, 17 lässt sich einerseits der Abstand C und andererseits der Überlapp D (vergleiche die Figuren 6 und 7) vorgeben.

Der Teigförderer 3 ist also so ausgeführt, dass er die mindestens zwei Teigabschnitte 4i, 5i mit vorgegebenem zeitlichem Abstand der Teig-Walzeinrichtung 19 zuführt. Dieser zeitliche Abstand kann über die zentrale Steuereinrichtung 12 so groß gewählt werden, dass der vorgegebene Überlapp D zwischen den Teigabschnitten 4i, 5i in der Teig-Walzeinrichtung 19 erreichbar ist.

## Patentansprüche

1. Teigband-Erzeugungsvorrichtung (1) zur Erzeugung eines Endlos-Teigbandes (2a),
- mit einem Teig-Vorratsbehälter (2),
- mit einem Teigabschnittserzeuger (3) zur Erzeugung portionsweiser Teigabschnitte (4i, 5i) aus bevorratetem Teig,
- mit einem Teigförderer (13) zum Fördern der Teigabschnitte (4i, 5i) nach dem Teigabschnittserzeuger (3),
- mit einer Teig-Walzeinrichtung (19) im Förderweg nach dem Teigförderer (3) zum Walzen der geförderten Teigabschnitte (4i, 5i) in das Teigband (2a),
- **dadurch gekennzeichnet, dass** der Teigabschnitterzeuger (3) derart ausgeführt ist, dass er mindestens zwei Teigabschnitte (4i, 5i) parallel erzeugt,
- wobei der Teigförderer (3) derart ausgeführt ist, dass er die mindestens zwei Teigabschnitte (4i, 5i) mit vorgegebenem zeitlichem Abstand der Teig-Walzeinrichtung (19) zuführt.

2. Teigband-Erzeugungsvorrichtung nach Anspruch 1, **dadurch gekennzeichnet, dass** der Teigabschnittserzeuger (3) über der Teig-Walzeinrichtung (19) angeordnet ist.

3. Teigband-Erzeugungsvorrichtung nach Anspruch 1 oder 2, **dadurch gekennzeichnet, dass** der Teigförderer (13) unabhängig vom Teigabschnittserzeuger (3) angetrieben ist.

4. Teigband-Erzeugungsvorrichtung nach einem der Ansprüche 1 bis 3, **dadurch gekennzeichnet, dass** der Teigförderer (13) unabhängig von der Teig-Walzeinrichtung (19) angetrieben ist.

5. Teigband-Erzeugungsvorrichtung nach einem der Ansprüche 1 bis 4, **dadurch gekennzeichnet, dass** der Teigabschnittserzeuger (3) für jeden parallel zu erzeugenden Teigabschnitt (4i, 5i) mindestens eine Sternwalze (6, 7) aufweist.

6. Teigband-Erzeugungsvorrichtung nach einem der Ansprüche 1 bis 5, **dadurch gekennzeichnet, dass** der Teigabschnittserzeuger (3) mindestens eine rotierende Schneide (8) zum Trennen der parallel erzeugten Teigabschnitte (4i, 5i) aufweist.

7. Verfahren zum Betrieb einer Teigband-Erzeugungsvorrichtung (1) nach einem der Ansprüche 1 bis 6, wobei wahlweise
- ein Betriebsmodus, bei dem alle von dem Teigabschnittserzeuger (3) parallel erzeugten Teigabschnitte (4i, 5i) der Teig-Walzeinrichtung (19) zugeführt werden oder
- ein Betriebsmodus, bei dem jeweils genau ein von dem Teigabschnittserzeuger (3) erzeugter Teigabschnitt (4i; 5i) der Teig-Walzeinrichtung (19) zugeführt wird
vorgegeben werden kann.

## Claims

1. Dough-sheet-forming apparatus (1) for forming an endless dough sheet (2a),
- having a dough-supply container (2),
- having a dough-portion former (3) for forming dough portions (4i, 5i) from supplied dough,
- having a dough conveyor (13) for conveying the dough portions (4i, 5i) downstream of the dough-portion former (3),
- having a dough-rolling device (19) in the conveying path downstream of the dough conveyor (3), for the purpose of rolling the conveyed dough portions (4i, 5i) into the dough sheet (2a),
- **characterized in that**
the dough-portion former (3) is designed such that it forms at least two dough portions (4i, 5i) parallel to one another,
- wherein the dough conveyor (3) is designed such that it feeds the at least two dough portions (4i, 5i) to the dough-rolling device (19) at a predetermined time interval.

2. Dough-sheet-forming apparatus according to Claim 1, **characterized in that** the dough-portion former (3) is arranged above the dough-rolling device (19).

3. Dough-sheet-forming apparatus according to Claim 1 or 2, **characterized in that** the dough conveyor (13) is driven independently of the dough-portion former (3).

4. Dough-sheet-forming apparatus according to one of Claims 1 to 3, **characterized in that** the dough conveyor (13) is driven independently of the dough-rolling device (19).

5. Dough-sheet-forming apparatus according to one of Claims 1 to 4, **characterized in that** the dough-portion former (3) has at least one start roller (6, 7) for each dough portion (4i, 5i) which is to be formed parallel to one another.

6. Dough-sheet-forming apparatus according to one of Claims 1 to 5, **characterized in that** the dough-portion former (3) has at least one rotating blade (8) for severing the dough portions (4i, 5i) formed parallel to one another.

7. Method for operating a dough-sheet-forming apparatus (1) according to one of Claims 1 to 6, wherein it is optionally possible to predetermine
- an operating mode in which all the dough portions (4i, 5i) formed parallel to one another by the dough-portion former (3) are fed to the dough-rolling device (19), or
- an operating mode in which in each case precisely one dough portion (4i; 5i) formed by the dough-portion former (3) is fed to the dough-rolling device (19).

## Revendications

1. Dispositif de production de bande de pâte (1) pour produire une bande de pâte sans fin (2a),
- avec un réservoir de pâte (2),
- avec un système producteur de morceaux de pâte (3) pour produire des morceaux de pâte (4i, 5i) par portions à partir d'une pâte stockée,
- avec un transporteur de pâte (13) pour transporter les morceaux de pâte (4i, 5i) après le système producteur de morceaux de pâte (3),
- avec un dispositif de roulage de pâte (19) sur le trajet de transport après le transporteur de pâte (3) pour rouler les morceaux de pâte (4i, 5i) transportés en la bande de pâte (2a),
- **caractérisé en ce que** le système producteur de morceaux de pâte (3) est réalisé de telle manière qu'il produit en parallèle au moins deux morceaux de pâte (4i, 5i),
- dans lequel le transporteur de pâte (3) est réalisé de telle manière qu'il amène les au moins deux morceaux de pâte (4i, 5i) avec un intervalle de temps prédéfini au dispositif de roulage de pâte (19).

2. Dispositif de production de bande de pâte selon la revendication 1, **caractérisé en ce que** le système producteur de morceaux de pâte (3) est disposé au-dessus du dispositif de roulage de pâte (19).

3. Dispositif de production de bande de pâte selon la revendication 1 ou 2, **caractérisé en ce que** le transporteur de pâte (13) est entraîné indépendamment du système producteur de morceaux de pâte (3).

4. Dispositif de production de bande de pâte selon l'une quelconque des revendications 1 à 3, **caractérisé en ce que** le transporteur de pâte (13) est entraîné indépendamment du dispositif de roulage de pâte (19).

5. Dispositif de production de bande de pâte selon l'une quelconque des revendications 1 à 4, **caractérisé en ce que** le système producteur de morceaux de pâte (3) présente pour chaque morceau de pâte (4i, 5i) à produire en parallèle au moins un rouleau étoile (6, 7).

6. Dispositif de production de bande de pâte selon l'une quelconque des revendications 1 à 5, **caractérisé en ce que** le système producteur de morceaux de pâte (3) présente au moins une lame (8) rotative pour séparer les morceaux de pâte (4i, 5i) produits en parallèle.

7. Procédé pour faire fonctionner un dispositif de production de bande de pâte (1) selon l'une quelconque des revendications 1 à 6, dans lequel au choix
- un mode de fonctionnement, dans lequel tous les morceaux de pâte (4i, 5i) produits en parallèle par le système producteur de morceaux de pâte (3) sont amenés au dispositif de roulage de pâte (19) ou
- un mode de fonctionnement, dans lequel respectivement précisément un morceau de pâte (4i ; 5i) produit par le système producteur de morceaux de pâte (3) est amené au dispositif de roulage de pâte (19),
peut être prédéfini.
